# EUROPÄISCHE PATENTSCHRIFT

(11) **EP 0 919 495 B1**
(45) Veröffentlichungstag und Bekanntmachung des Hinweises auf die Patenterteilung: **03.03.2004**
(21) Anmeldenummer: 98250391.4
(22) Anmeldetag: 09.11.1998
(51) Int. Cl.: B65G 47/38

(54) **Förderer für die Sortierung von Stückgut**
Conveyor for sorting articles
Transporteur pour trier des articles

(30) Priorität: 02.12.1997 DE 19755474
(43) Veröffentlichungstag der Anmeldung: 02.06.1999
(73) Patentinhaber: Siemens Aktiengesellschaft, 80333 München (DE)
(72) Erfinder: Baum, Ingolf Dipl.-Ing., 63128 Dietzenbach (DE); Droste, Heinrich, Dr.-Ing., 74889 Sinsheim (DE); Humburg, Holger, Dipl.-Ing., 63452 Hanau (DE)

(56) Entgegenhaltungen:
- EP-A- 0 664 262
- DE-A- 4 342 851
- DE-C- 4 447 396
- US-A- 4 846 335

## Beschreibung

Die Erfindung betrifft einen Förderer für die Sortierung von Stückgut, insbesondere von Paketen, Päckchen, Behältern und Gepäckstücken, gemäß dem Oberbegriff des Anspruches 1.

Ein derartiger Förderer für die Sortierung von Stückgut ist bereits aus der deutschen Patentschrift DE 44 47 396 C1 bekannt. Dieser Förderer besteht im wesentlichen aus einer Vielzahl von aneinander gekoppelten und auf Fahrschienen verfahrbaren Wagen, die eine endlose Förderstrecke bilden. Die Wagen sind hauptsächlich aus einem Fahrrahmen und einer hierauf an Stützelementen gelagerten Tragschale aufgebaut, die für die Abgabe des Stückgutes um eine in Fahrtrichtung und im wesentlichen horitzontal verlaufende Kippachse aus einer horizontalen Transportstellung in eine Kippstellung jeweils nach einer der beiden Seiten schwenkbar ist. Für die Sortierung des Stückgutes sind entlang des Förderers Zielstationen angeordnet, in die das Stückgut nach vorheriger Zuführung über Aufgabestationen auf die Tragschalen vorgewählt durch eine Kippbewegung der Tragschale einsortiert wird. Dieser Sortierförderer zeichnet sich durch eine einfache und schnell schaltende Kippvorrichtung für die Tragschale aus.

Diese Kippvorrichtung besteht im wesentlichen aus einem Schieberelement, das quer zur Fahrtrichtung und im wesentlichen horizontal verschiebbar an sowie zwischen den Stützelementen geführt ist. Das Schieberelement wird für die Kippbewegung der Tragschale über Rollen, die an den seitlichen Enden des Schieberelementes angeordnet sind und die in entlang der Fahrschienen verlaufende Kurvenschienen eingreifen, in dessen Verschieberichtung bewegt. Für die Weiterleitung der Verschiebekräfte ist das Schieberelement einerseits über einen Verbindungshebel gelenkig mit dem freien Ende eines Hebels verbunden, an dessen anderen Ende die Tragschale befestigt ist. Dieser Hebel ist in seiner Mitte an der in Fahrtrichtung verlaufenden Kippachse gelagert, die mit ihren Enden in den zwei Stützelementen gehalten wird. An dem dem Hebel gegenüberliegenden Ende greifen an dem Schieberelement zwei sogenannte Schaltelemente an, die jeweils in Form eines Hebels um eine quer zur Fahrtrichtung und horizontal verlaufende Schaltachse gelagert sind, an deren freien Ende ein Mitnehmerelement in Form der in die Kurvenschiene eingreifenden Rolle gelagert ist. Jedes Schaltelement ist um die Schaltachse aus einer Ruhestellung in eine Betriebsstellung schwenkbar. In der Ruhestellung weist das Schaltelement gegen die Fahrtrichtung gesehen ein nach unten abfallenden Verlauf auf und verriegelt das Schieberelement gegenüber dem Fahrrahmen, so daß die Tragschale in der Transportstellung gehalten wird.

Zur Einleitung und Ausführung der Kippbewegung der Tragschale ist das Mitnehmerelement in eine C-förmige und nach unten offene Kurvenschiene einfahrbar, die im Bereich der Zielstationen entlang der Fahrschiene verläuft. Da die Kurvenschienen jeweils einen leicht nach außen gekrümmten Verlauf aufweisen, wird das Schieberelement über das in der Kurvenschienen geführte Mitnehmerelement seitlich nach außen gezogen. Durch diese seitliche Bewegung des Schieberelementes wird über den Verbindungshebel der Hebel verschwenkt und somit die Tragschale zu der Seite gekippt, die der Kurvenschiene gegenüber liegt. Damit das Schaltelement mit seinem Mitnehmerelement in die im Bereich der Zielstation beginnende Kurvenschiene einfahren kann, sind in den Fahrweg des Schaltelementes von der Seite her einschiebbare Weichenelemente vorgesehen, die beispielsweise als Rollen ausgebildet sind. Für den Fall, daß ein Stückgutteil abgekippt werden soll, wird von den Weichenelementen das Schaltelement aus seiner Ruhestellung in eine im wesentlichen horizontale Betriebsstellung angehoben, so daß die in dieser Stellung um eine im wesentlichen vertikale Achse drehbare Rolle in die C-förmige Kurvenschiene einfahren kann. Das Mitnehmerelement wird durch die Hinterschneidung der C-förmigen Kurvenschiene in Vertikalrichtung gehalten. Dieser Förderer zum Sortieren von Stückgut hat sich im Einsatz bewährt.

Desweiteren ist aus der Veröffentlichung DE 40 90 308 T1 ein Förderer für die Sortierung von Stückgut beschrieben, der ebenfalls aus einer Vielzahl von hintereinander angeordneten Wagen mit Fahrrahmen besteht, die jeweils eine hierauf angeordnete und über eine in Fahrtrichtung verlaufende Kippachse seitlich schwenkbare Tragschale aufweisen. Auch hier erfolgt der Antrieb der Tragschale für die Kippbewegung durch Einfahren von Mitnehmerelementen in entlang der Fahrschiene verlaufende Kurvenschienen. Der Förderer unterscheidet sich von dem zuvor beschriebenen durch die spezielle Ausbildung der Kippmechanik, die hier im wesentlichen aus zwei seitlich außen und unterhalb der Tragschale angelenkten Hebeln besteht. Die Hebel sind jeweils etwa auf halber Länge über einen Stift in einer Kulissenführung geführt und an deren freiem Ende ist das Mitnehmerelement für die Zusammenwirkung mit der Kurvenschiene gelagert. Das Mitnehmerelement ist als Rolle ausgebildet, die um eine quer zur Förderrichtung sowie im wesentlichen horizontal verlaufende Achse drehbar ist. Anhand der Kulissenführung des Hebels ist es möglich, die Tragschale in der Transportstellung und der Kippstellung zu arretieren. Für die Einleitung der Kippbewegung muß daher zunächst der Hebel über das Mitnehmerelement seitlich nach außen geschwenkt werden, um die Tragschale zu entriegeln und anschließend wird die Rolle von der Kurvenschiene nach unten bewegt, wodurch die Tragschale zu der gleichen Seite abgekippt wird, auf der die Kurvenschiene angeordnet ist. Am Ende des Kippvorgangs wird der Hebel über die Rolle wieder nach innen in eine weitestgehend vertikale Stellung zurückgeschwenkt, damit die Tragschale in der Kippstellung arretiert wird.

Diese Kippmechanik des Förderers für die Sortierung von Stückgut erweist sich als nachteilig, da für die Ver- und Entriegelungsbewegung der Hebel nach außen und innen geschwenkt werden muß und somit die Rollen in den Kurvenschienen quer zu ihrer Laufrichtung beansprucht werden. Deren Veschleiß ist somit erhöht. Außerdem befindet sich während der Kippbewegung der Tragschale der Hebel außerhalb seiner vertikalen Stellung, so daß die Drehachse der Rolle schräg zu deren Lauffläche verläuft. Hierdurch läuft die Rolle während der Kippbewegung der Tragrolle nur auf einer Kante ihrer Lauffläche ab. Auch hierdurch wird deren Verschleiß beschleunigt. Darüberhinaus wird die Baubreite der einzelnen Wagen durch die. seitlich außen liegenden Hebel und die Kulissenführungen wesentlich erhöht. Außerdem wird durch die Anordnung der Kurvenschienen unterhalb der Wagen sowie deren Auslenkung nach oben und unten für die Durchführung der Kippbewegung die Bauhöhe des Förderers erhöht. Femer ist eine sehr lagegenaue Montage der Weichenelemente und der Kurvenschienen erforderlich, da durch den weit außenliegenden Angriffspunkt der Hebel an der Tragschale Lageungenauigkeiten der Weichenelemente und der Kurvenschienen verstärkt werden.

Dieser Erfindung liegt die Aufgabe zugrunde, einen konstruktiv einfachen Förderer für die Sortierung von Stückgut, insbesondere von Paketen, Päckchen, Behältern und Gepäckstücken, mit einer kompakten Baugröße zu schaffen, der gleichzeitig einen optimierten Kraftfluß in der Kippmechanik aufweist.

Diese Aufgabe wird bei einem Förderer für die Sortierung von Stückgut, insbesondere von Paketen, Päckchen, Behältern und Gepäckstücken, durch die im Anspruch 1 angegebenen Merkmale gelöst. Vorteilhafte Ausgestaltungen der Erfindung sind in den Ansprüchen 2 bis 18 angegeben.

Erfindungsgemäß wird bei einem Förderer für die Sortierung von Stückgut mit seitlich kippbaren Tragschalen, deren Kippmechanik im wesentlichen durch ein quer zur Förderrichtung über in abschnittsweise parallel zur Förderstrecke verlaufende Kurvenschienen einrückbare Mitnehmerelemente verschiebbares Schieberelement bestimmt ist, durch die Anordnung der Schaltachsen der an dem Schieberelement angegreifenden Schaltelemente parallel zur Kippachse der Tragschale erreicht, daß der Kraftfluß von den in den Kurvenschienen geführten Mitnehmerelementen über die Schaltachse in das Schieberelement direkter erfolgt. Darüber hinaus wird durch die Anordnung einer in einem der beiden Stützelemente zur Lagerung der Kippachse der Tragschale angeordnete Längsnut erreicht, daß eine Arretierung der Tragschale in der Transportstellung erzielt werden kann. Durch Ausbildung der Längsnut ist es vorteilhafterweise auch möglich, daß über das in der Längsnut geführte Führungselement das Mitnehmerelement während der Kippbewegung der Tragschale in einer vorgegebenen Höhe gehalten werden kann, wodurch die Kurvenschiene vorteilhafterweise als nach unten offenes U-Profil ausgebildet werden kann.

Für die Verriegelung der Tragschale in der Transportstellung weist die Längsnut für das Führungselement einen schräg zu der Bewegungsrichtung des Schieberelementes verlaufenden ersten Abschnitt auf, in dem das Führungselement zwei Endstellungen einnehmen kann. In der ersten als Betriebsstellung bezeichneten Endstellung ist das Schieberelement im wesentlichen horizontal ausgerichtet und das vorteilhafterweise als Rolle ausgebildete Mitnehmerelement ist um eine im wesentlichen vertikale Achse drehbar gelagert. In dieser Betriebsstellung kann das Mitnehmerelement in die Kurvenschiene einfahren und wird anschließend in den Kurvenschienen für die Kippbewegung geführt. In der anderen als Ruhestellung bezeichneten Endstellung ist das Schaltelement leicht nach unten geschwenkt, so daß das Mitnehmerelement außerhalb und unterhalb der Kurvenschienen an diesen vorbeigeführt werden kann.

An diesen ersten Abschnitt der Längsnut schließt sich ein parallel zu der Bewegungsrichtung des Schieberelementes verlaufender zweiter Abschnitt für das Halten des Mitnehmerelementes in der Kurvenschiene während der Bewegung des Führungselementes in der Betriebsstellung des Schaltelementes zwischen der Transportstellung und der Kippstellung der Tragschale auf.

In einer weiteren Ausbildung der Erfindung ist vorgesehen, die Tragschale auch in der Kippstellung zu arretieren. Hierfür schließt sich an dem dem ersten Abschnitt abgewandten Ende des zweiten Abschnittes ein ebenfalls schräg zur Bewegungsrichtung des Schieberelementes verlaufender dritter.Abschnitt an. Innerhalb dieses Abschittes kann das Führungselement bei gleichzeitig in der Kippstellung befindlicher Tragschale aus seiner Betriebs- in seine Ruhestellung verschwenkt werden. Da der dritte sowie auch der erste Abschnitt jeweils schräg zur Bewegungsrichtung des Schieberelementes verlaufen, erfolgt bei in Ruhestellung befindlichem Schaltelement eine Verriegelung des Schieberelementes über die in den Endstellungen der Abschnitte ruhenden Führungselemente, die sich in der Längsnut abstützen.

In Ausbildung der Erfindung mit Tragschalen, die jeweils nach beiden Seiten zur Fahrtrichtung kippbar sind, sind je Schieberelement zwei Schaltelemente vorgesehen, deren Schaltachsen in Transportstellung der Tragschale und in Vertikalrichtung gesehen jeweils seitlich zur Kippachse versetzt und in Bezug auf die Kippachse gegenüberliegend angeordnet sind. Somit weist jeder Wagen zwei seitlich nach außen hervorragende Schaltelemente mit Mitnehmerelementen auf. Da für die Kippbewegung der Tragschale zu der einen Seite nur das auf der gegenüberliegenden Seite angeordnete Schaltelement benötigt wird, ist eine Verlängerung der Längsnut um einen vierten Abschnitt vorgesehen, um dem nicht aktiven Schaltelement eine Bewegung entgegen seiner Wirkrichtung zu ermöglichen. Dieser vierte Abschnitt schließt sich an dem dem zweiten Abschnitt abgewandten Ende des ersten Abschnittes an sowie verläuft parallel zur Bewegungsrichtung des Schieberelementes. Hierdurch wird das nicht aktive Schaltelement während der Kippung der Tragschale durch das andere Schaltelement in der nach unten geschwenkten Ruhestellung gehalten.

In besonders konstruktiv einfacher Weise ist bei dem vorliegenden Förderer das Schieberelement aus den beiden Schaltachsen der Schaltelemente gebildet, deren Enden jeweils über eine Strebe rahmenförmig miteinander verbunden sind. Hierbei sind die Enden der Schaltachsen jeweils in einer weitestgehend horizontal verlaufenden Längsnut geführt, die jeweils in den Innenseiten der Stützelemente angeordnet sind. Um einen leichten Lauf des Schieberelementes in den Längsnuten zu erreichen, sind die Streben als paßfederförmige Gleitstücke ausgebildet.

Vorzugsweise sind die Schaltelemente im Querschnitt und in Fahrtrichtung gesehen als Doppelhebel ausgebildet, deren seitlich nach außen ragenden Enden jeweils das Mitnehmerelement und an deren nach innen ragenden Enden jeweils das Führungselement tragen. An dem Schaltelement ist ein als Rolle ausgebildetes Mitnehmerelement an einer Achse gelagert, das bei in Betriebsstellung befindlichem Schaltelement vertikal ausgerichtet ist. Desweiteren weisen die Schaltelemente an ihrer Unterseite und in Fahrtrichtung verlaufende Abschrägungen auf, die für die Bewegung des Schaltelementes aus der Ruhestellung in die Betriebsstellung mit am Beginn der Kurvenschienen angeordneten Weichenelementen wechselwirken. Die Weichenelemente sind hierzu als in die Bewegungsbahn der Schaltelemente bewegbare Kombination aus Rollen und Gleitelementen ausgebildet, über die im aktivierten Zustand die Anlaufschrägen der Schaltelemente laufen und somit die Schaltelemente angehoben werden. Um am Auslauf der Kurvenschienen die Schaltelemente aus ihrer Betriebsstellung wieder nach unten in ihre Ruhestellung zu verschwenken, sind die Kurvenschienen nach unten abgeschrägt ausgebildet.

Für die Auslösung der Kippbewegung der Tragschale sind die Kurvenschienen in Fahrtrichtung gesehen zur Bewegung des Schaltelementes nach außen ebenfalls nach außen gekrümmt und verlaufen zur Aufrichtung der Schale in entgegengesetzter Richtung. Auch sind die Kurvenschienen als nach unten offene U-Profile ausgebildet, in die die Mitnehmerelemente von unten einfahrbar sind. Da die Mitnehmerelemente über die Führungselemente in den Längsnuten in ihrer Betriebsstellung gehalten werden, ist eine Ausbildung der Kurvenschienen als C-Profile zur Führung der Mitnehmerelemente in Vertikalrichtung nicht notwendig.

Zusätzlich sind an jedem Schaltelement Formelemente in Form von Rollenlagern und an den Stützelementen hierzu komplementär ausgebildete Ausnehmungen angeordnet, um in der Ruhestellung des Schaltelementes bei gleichzeitig in ihrer Transportstellung befindlicher Tragschale die von der Tragschale über den Hebel in die Schaltelemente eingeleiteten Kräfte sicher in die Stützelemente weiterzuleiten. Hierdurch werden die Führungselemente in den Längsnuten entlastet.

Die ersten und dritten Abschnitte der Längsnut weisen einen entsprechend dem Schwenkradius des Führungselementes an dem Schaltelement gekrümmten Verlauf auf. Um die Kräfte zwischen dem um die Kippachse schwenkbaren Hebel und dem linear sowie quer zur Fahrtrichtung verschiebbaren Schieberelementen zu übertragen, ist ein parallel zur Kippachse schwenkbarer Verbindungshebel mit seinen Enden an dem Hebel und dem Schieberelement gelagert.

In der Zeichnung ist ein Ausführungsbeispiel der Erfindung dargestellt und wird im folgenden näher beschrieben. Es zeigen:
- Figur 1: einen Ausschnitt eines Förderers mit kippbaren Tragschalen,
- Figur 2: eine Ausschnittsvergrößerung eines Wagens von Figur 1,
- Figur 3: einen vertikalen Schnitt von Figur 1 mit nur teilweise dargestellter Fahrschiene,
- Figur 4: eine Ansicht gemäß Figur 3 mit einer Tragschale in Kippstellung,
- Figur 5: einen horizontalen Schnitt durch die Stützelemente eines Wagens gemäß Figur 2 auf der Höhe des Schieberelementes,
- Figur 6: eine Draufsicht auf eine Kurvenschiene für eine Kippbewegung,
- Figur 7: eine Draufsicht einer Kurvenschiene für eine Aufrichtbewegung der Tragschale und
- Figur 8: eine Seitenansicht von Figur 7.

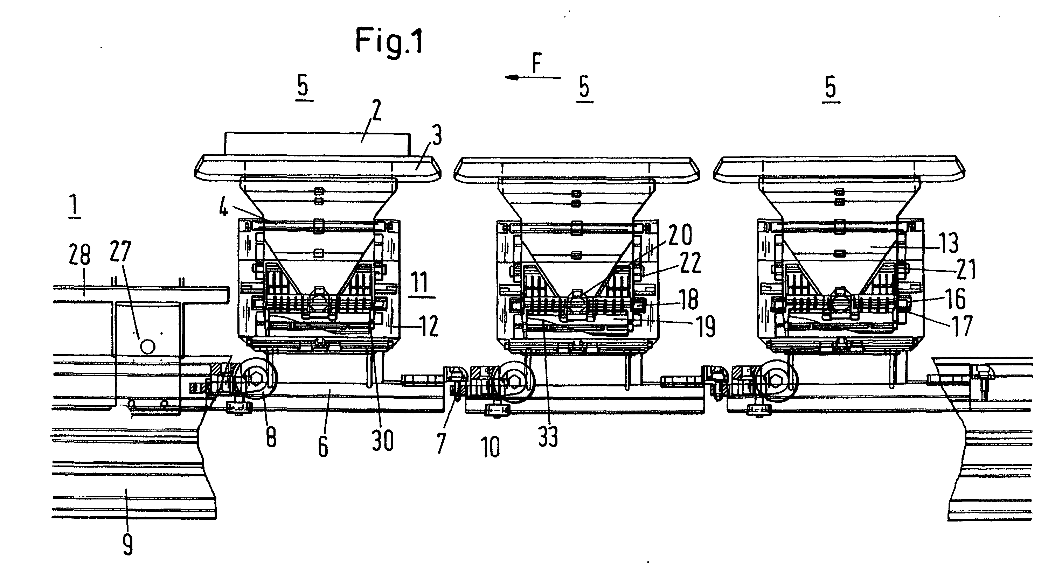

Die Figur 1 zeigt einen Ausschnitt von einem Förderer 1 für die Sortierung von Stückgutteilen 2, insbesondere von Paketen, Päckchen, Behältern oder Gepäckstücken. Der gesamte nicht dargestellte Förderer 1 weist einen Zuführförderer auf, der beispielsweise als Rollenbahn oder Bandförderer ausgebildet sein kann, von dem Stückgut 2 auf den Förderer 1 aufgegeben werden. Der Förderer 1 ist vorzugsweise als endlose Förderstrecke ausgebildet, so daß das aufgegebene Stückgut 2 von dem Zuführförderer entlang einer Vielzahl von Zielstationen, die beispielsweise als Rutschen oder ebenfalls als Rollenbahn ausgebildet sein können, vorbeigeführt wird. Um die Stückgutteile 2 von dem Förderer 1 vorgewählt an die Zielstationen übergeben zu können, weist der Förderer 1 Tragschalen 3 für den Transport der Stückgutteile 2 auf, die nach beiden Seiten um eine in Fahrtrichtung F verlaufende Kippachse 4 schwenkbar gelagert sind. Somit können die Stückgutteile 2 vorbestimmt in die Zielstationen ausgeschleust werden. Der Figur 1 ist zu entnehmen, daß die Tragschalen 3 zu einzelnen Wagen 5 gehören, die neben der Tragschale 3 als weiteren wesentlichen Bestandteil einen Fahrrahmen 6 aufweisen. Die einzelnen Wagen 5 sind jeweils über eine Kupplung 7 zu einer endlosen Kette miteinander verbunden. An dem Fahrrahmen 6 sind jeweils 2 in Fahrtrichtung F gesehen nebeneinander angeordnete Fahrrollen 8 vorgesehen, die den Fahrrahmen 6 in Fahrtrichtung F gesehen vorne im Bereich der Kupplung 7 auf einer aus Fahrschienen 9 gebildeten Förderstrecke abstützen. Desweiteren sind an dem Fahrrahmen 6 um vertikale Achsen drehbare Führungsrollen 10 angeordnet, die den Fahrrahmen 6 seitlich an den Fahrschienen 9 von innen führen. Die Führungsrollen 10 sind hierzu zwischen den Fahrrollen 8 und der Kupplung 7 gelagert. Um die Wagen 5 stabil auf den Fahrschienen 9 verfahren zu können, ist das den Fahrrollen 8 abgewandte Ende des Fahrrahmens 6 über die Kupplung 7 an dem in Fahrtrichtung F stromaufwärts gesehen folgenden Wagen 5 abgestützt. Durch diese Anordnung braucht jeder Fahrrahmen nur zwei Fahrrollen 8 sowie zwei Führungsrollen 10 aufweisen.

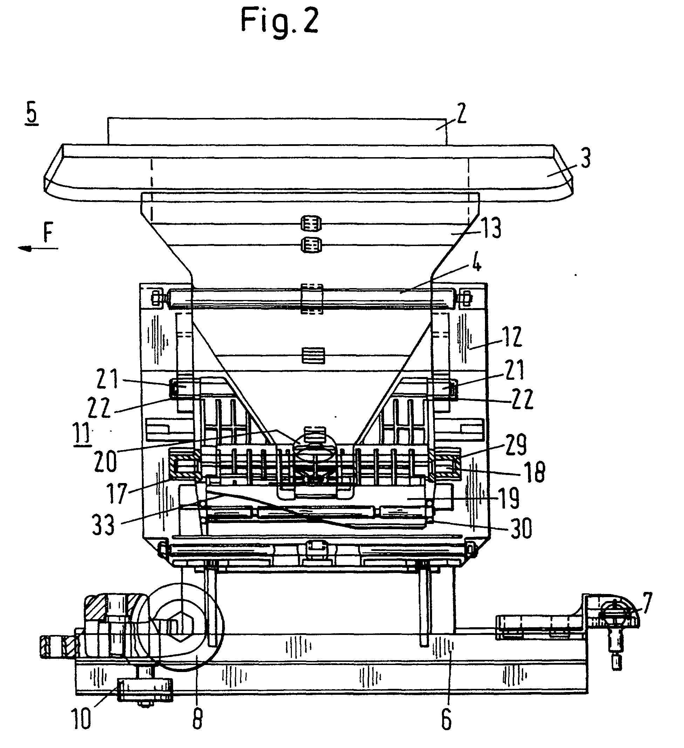

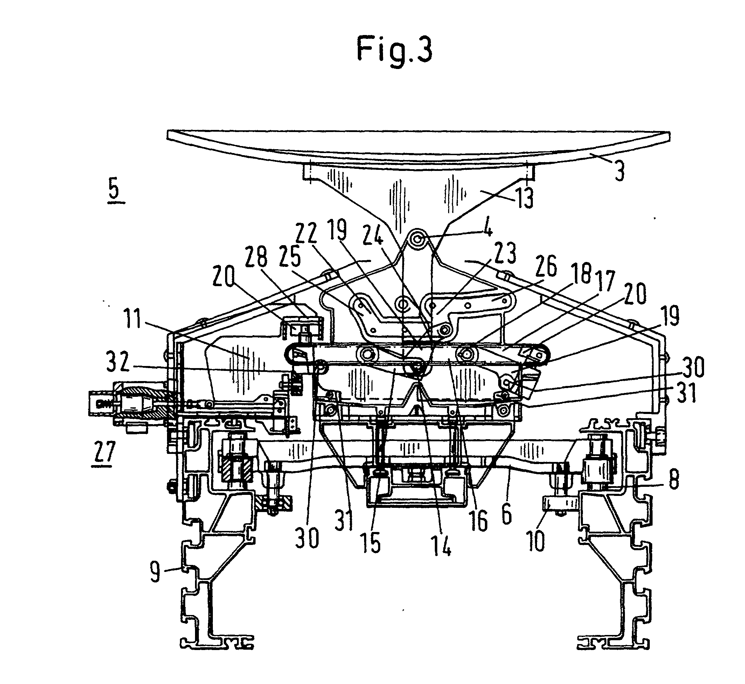

Der detailliertere Aufbau der Wagen 5 ist der Figur 2 zu entnehmen, die eine Ausschnittsvergrößerung eines Wagens 5 von Figur 1 zeigt. Es ist ersichtlich, daß auf dem Fahrrahmen 6 über eine Kippvorrichtung 11 die Tragschale 3 für das Stückgut 2 gelagert ist. Die Kippvorrichtung 11 besteht im wesentlichen aus zwei L-förmigen Stützelementen 12, die mit ihren Schenkeln einander zugewandt und aneinandergrenzend ein in der Seitenansicht gesehen U-förmiges Bauteil bilden. Die kurzen Schenkel der Stützelemente 12 bilden somit eine durchgehende Bodenplatte, die auf dem Fahrrahmen 6 gelagert ist. An dem den Fahrrahmen 6 abgewandten Ende der langen Schenkel der Stützelemente 12 ist jeweils ein Ende der in Fahrtrichtung F verlaufenden Kippachse 4 gelagert. An der Kippachse 4 ist über einen Hebel 13 die Tragschale 3 gelagert. Der Hebel 13 ist als Doppelhebel ausgebildet und in der Seitenansicht im Bereich zwischen der Kippachse 4 und der Tragschale 3 dachförmig mit abgeschrägten Giebelwänden sowie in dem sich an die Kippachse 4 nach unten anschließenden Teil in der Seitenansicht dreieckförmig ausgebildet. Die dachförmige Ausbildung des Hebels 13 bietet eine große und somit stabile Auflagefläche für die Tragschale 3. An dem der Tragschale 3 abgewandten Ende werden die für die Kippbewegung der Tragschale 3 erforderlichen Kräfte eingeleitet. In welcher Art diese Kippkräfte eingeleitet werden ist den folgenden Figuren 3 bis 6, die verschiedene Ansichten eines einzelnen Wagens 5 zeigen, zu entnehmen.

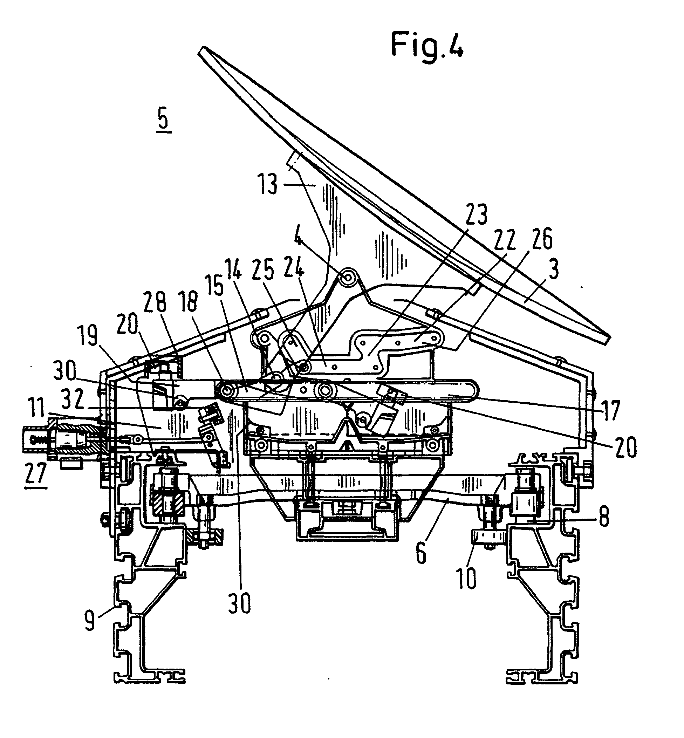

Der Figur 3, die einen Querschnitt durch den Förderer 1 und dessen Wagen 3 zeigt, ist zu entnehmen, daß das der Tragschale 3 abgewandte Ende des Hebels 13 über eine parallel zur Kippachse 4 ausgerichtete Verbindungsachse 14 mit einem Verbindungshebel 15 verbunden ist, der gelenkig mit einem Schieberelement 16 verbunden ist. Das Schieberelement 16 ist mit seinem in Fahrtrichtung F gesehenen vorderen und hinteren Enden jeweils in einer in der Innenseite des Stützelementes 12 angeordneten Längsnut 17 geführt, die quer zur Fahrtrichtung F, gerade und horizontal verläuft. In dieser Längsnut 17 ist das Schieberelement 16 aus einer Mittelstellung, in der sich die Tragschale 3 in ihrer horizontalen Transportstellung befindet, jeweils nach rechts und links in eine Endstellung verschiebbar, in der die Tragschale 3 sich in ihrer jeweiligen Kippstellung befindet. Die linke Endstellung des Schieberelementes 16 ist der Figur 4 zu entnehmen, die eine Ansicht gemäß Figur 3 zeigt, wobei jedoch die Tragschale 3 in nach rechts gekippter Stellung dargestellt ist. Der Verbindungshebel 15 hat die Aufgabe, die Kräfte zwischen dem horizontal verschiebbaren Schieberelement 16 und dem sich auf einem Kreisbogen bewegenden Ende des Hebels 13 zu übertragen. Die Stützelemente 12, der Hebel 13 und die Schieberelemente 16 sind jeweils als Kunststoffspritzgußteile ausgebildet.

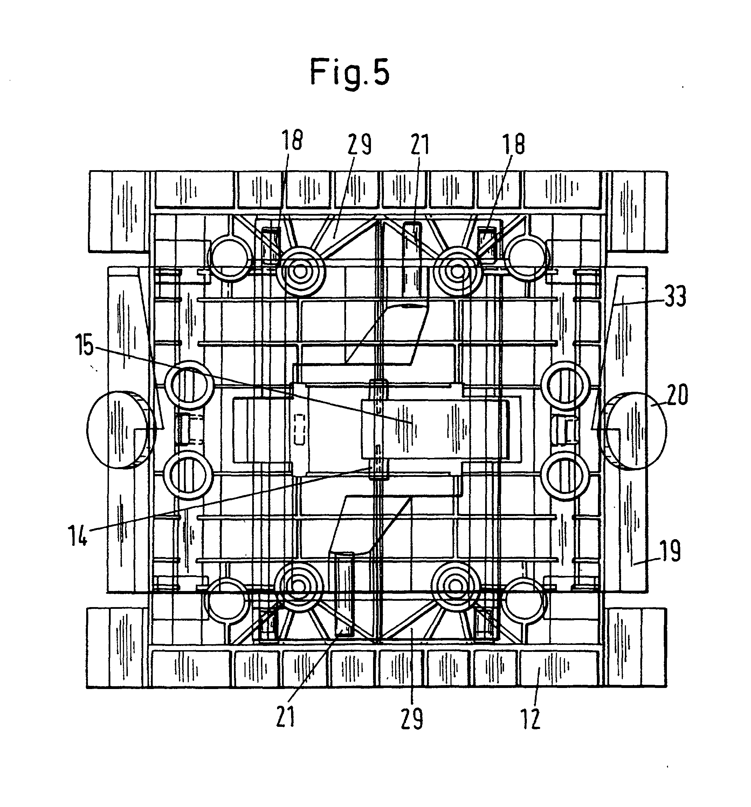

In der Figur 5 ist ein Horizontalschnitt durch einen Wagen 5 in Höhe der Längsnut 17 dargestellt. Es ist ersichtlich, daß das Schieberelement 16 aus zwei in Fahrtrichtung F sowie parallel zueinander verlaufenden Schaltachsen 18, deren Ende jeweils in einer gemeinsamen Strebe 29 gelagert sind, gebildet ist, so daß in Draufsicht gesehen das Schieberelement 16 als Rechteckrahmen ausgebildet ist. Die Streben 29 sind hierbei innerhalb der Längsnut 17 quer zur Fahrtrichtung F in Form von Schubsteinen verschiebbar angeordnet. Darüberhinaus ist jeweils an und seitlich neben den Schaltachsen 18 ein Schaltelement 19 gelagert, das in Fahrtrichtung F gesehen auf einer Höhe mit dem Verbindungshebel 15 Mitnehmerelemente 20 trägt, die vorzugsweise als Rollen ausgebildet sind. Die Schaltelemente 19 sind als Doppelhebel ausgebildet, wobei das dem Mitnehmerelement 20 und der Schaltachse 18 gegenüberliegende Hebelende des Schaltelements 19 mit einem stiftförmigen Führungselement 21 versehen ist, das in eine Führungsnut 22 eingreift. Hierbei sind in Draufsicht gesehen die Schaltelemente 19 unsymmetrisch ausgebildet, so daß das in Fahrtrichtung F gesehen rechte Schaltelement ein Führungselement 21 aufweist, das in eine Führungsnut 22 eingreift, die an der Innenseite des in Fahrtrichtung F gesehen stromaufwärts gelegenen Stützelementes 12 angeordnet ist. Das Führungselement 21 des gegenüberliegenden Schaltelementes 19 ist dementsprechend in einer Führungsnut 22 geführt, die in Fahrtrichtung F gesehen in dem in Fahrtrichtung F gesehen stromabwärts gelegenen Stützelements 12 angeordnet ist. Desweiteren ist der Figur 5 zu entnehmen, daß die Schaltachsen 18 parallel zur Fahrtrichtung F und zur Kippachse 4 sowie in Draufsicht auf den Wagen 5 gesehen seitlich zur Kippachse 4 versetzt angeordnet sind.

Die Figur 3 zeigt die Tragschale 3 in ihrer Transportstellung zum Beginn der Einleitung eines Kippvorgangs. Hierzu ist bereits das in Fahrtrichtung F gesehen linke Schaltelement 19 um die Schaltachse 18 aus seiner Ruhestellung, in der sich das Führungselement 21 in einer abgesenkten Stellung befindet, in die horizontale Stellung verschwenkt worden. Dieser Schwenkvorgang erfolgt durch ein von unten an das Schaltelement 19 angreifende Schaltrolle 32 eines Weichelements 27. Das Führungselement 21 befindet sich in dieser Stellung der Tragschale 3 in einem ersten Abschnitt der Führungsnut 22, der schräg zur Längsnut 17 verläuft sowie eine Krümmung aufweist, die dem Schwenkradius des Führungselementes 21 um die Schaltachse 18 entspricht. Wenn das Schaltelement sich noch in seiner Ruhestellung befindet, ist das Führungselement 21 in dem ersten Abschnitt 23 der Nut 22 in seiner oberen Endstellung. In dieser Stellung wird ein Verschieben des Schieberelementes 16 in der Längsnut 17 zur linken Seite verhindert, da sich das Führungselement 21 an der Wandung des ersten Abschnitts 23 abstützt. Da die gleiche Anordnung der Nut 22 mit einem ersten Abschnitt 23 sowie einem Schaltelement 19 mit einem Führungselement 21 an dem gegenüberliegenden Stützelement 12 in spiegelbildlicher Form vorgesehen ist, wird, wenn auch dieses andere Schaltelement 19 sich in seiner abgesenkten Ruhestellung befindet, eine Bewegung der Tragschale 3 in die entgegengesetzte Richtung verhindert. Somit kann die Tragschale 3 in ihrer Transportstellung über die Schaltelemente 19 mit ihren Führungselementen 21 wirksam verriegelt werden.

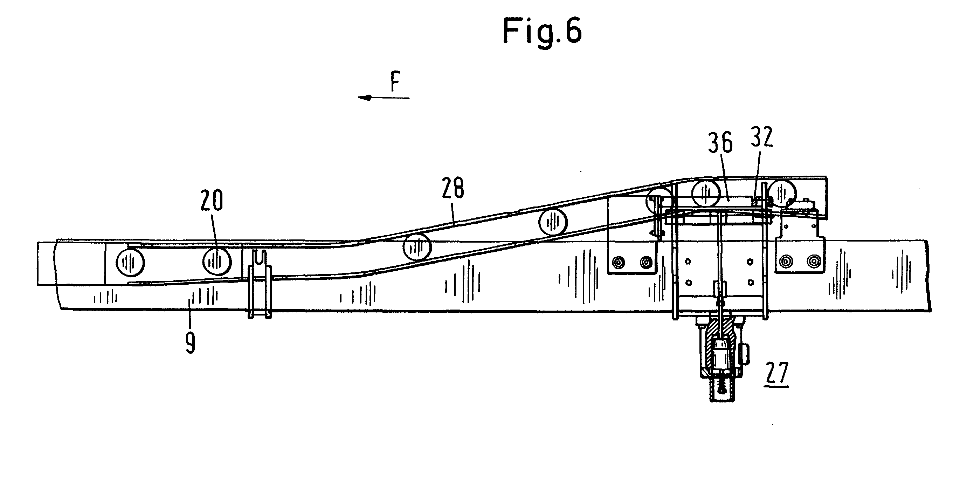

Um diese Verriegelung für einen Kippvorgang der Tragschale 3 auflösen zu können, sind die Weichenelemente 27 vorgesehen, durch die je nach gewünschter Kipprichtung der Tragschale 3 das linke oder rechte Schaltelement 19 aus seiner Ruhestellung in eine weitestgehend horizontale Betriebsstellung angehoben wird. Unter horizontal wird hier verstanden, daß der Abschnitt des Schaltelementes 19 zwischen der Schaltachse 18 und dem Mitnehmerelement 20 horizontal ausgerichtet ist. Hierdurch ist bei einem als Rolle ausgebildeten Mitnehmerelement 20 die Achse zur Lagerung der Rolle im wesentlichen vertikal ausgerichtet. Durch Verschwenkung des Schaltelementes 19 aus der Ruhestellung in die Betriebsstellung wird gleichzeitig das Führungselement 21 im ersten Abschnitt 23 der Nut 22 aus seiner oberen Endstellung in eine untere Endstellung verschwenkt. Da sich an den ersten Abschnitt 23 im Bereich des unteren Endes ein zweiter Abschnitt 24 anschließt, der parallel zur Längsnut 17 verläuft, kann das Schieberelement 16 nun innerhalb der Längsnut 17 frei nach links bewegt werden. Die Bewegung des Schieberelementes 16 innerhalb der Längsnut 17 erfolgt über das in einer Kurvenschiene 28 geführte Mitnehmerelement 20. Hierzu ist die Kurvenschiene 28 in Fahrtrichtung F gesehen horizontal und nach außen gekrümmt verlaufend angeordnet (siehe insbesondere Figur 6).

Desweiteren ist den Figuren 3 und 4 zu entnehmen, daß während der Schiebebewegung des Schieberelementes 16 aus seiner Mittelstellung in seine linke Endstellung das Schaltelement 19 in seiner Betriebsstellung gehalten wird, da das Führungselement 21 in dem zweiten Abschnitt 24 der Führungsnut 22 nicht nach unten wegschwenken kann. Während das aktive Schaltelement 19 von dem Mitnehmerelement 20 und der hiermit zusammen wirkenden Kurvenschiene 28 nach links gezogen wird, verbleibt das andere Schaltelement 19 in seiner Ruhestellung. Um eine Verschiebung des weiteren Schaltelements 19 entgegen seiner aktiven Wirkungsrichtung zu ermöglichen, ist eine Verlängerung der Führungsnut 22 um einen vierten Abschnitt 26 vorgesehen. Dieser vierte Abschnitt 26 verläuft im wesentlichen parallel zur Längsnut 17 und ist hierbei jedoch leicht von der Längsnut 17 weggekrümmt ausgebildet, um das Schaltelement 19 mit seinem Mitnehmerelement 20 etwa in einer Höhe zu halten, in dem es beim Verschwenkvorgang nicht mit anderen Bauteilen der Kippvorrichtung 11 kollidiert. Zur Verriegelung der Tragschale 3 in seiner Kippstellung ist ein dritter Abschnitt 25 der Führungsnut 22 vorgesehen. Innerhalb dieses dritten Abschnittes 25 kann entsprechend dem ersten Abschnitt 23 das aktive Schaltelement 19 aus seiner Betriebsstellung um die Schaltachse 18 in seine Ruhestellung verschwenkt werden. Dementsprechend ist der Verlauf des ersten Abschnitts 23 an den Schwenkradius des Führungselementes 21 um die Schaltachse 18 angepaßt. Da in der Ruhestellung des Schaltelementes 19 das Führungselement 21 nicht parallel zur Längsnut 17 verschoben werden kann, wird hierdurch die Tragschale 3 in ihrer Kippstellung arretiert. Das Führungselement 21 des anderen Schaltelements 19 befindet sich in der gekippten Stellung der Tragschale 3 in einem im wesentlichen zur Längsnut 17 parallelen vierten Abschnitt 26. Für die Bewegung des Schaltelementes 19 nach erfolgter Kippbewegung der Tragschale 3 aus seiner Betriebsstellung in die verriegelnde Ruhestellung ist an dem Auslauf der Kurvenschiene 28 ein gekrümmt nach unten verlaufendes Auslaufteil 35 vorgesehen.

Die Figur 3 und 4 zeigen auch, daß bei in Transportstellung befindlicher Tragschale 3 sich die beiden Schaltelemente 19 in ihrer die Tragschale 13 arretierenden Ruhestellung befinden. Um die Führungselemente 21 in den Führungsnuten 22 bezüglich der Arretierungskräfte zu entlasten, ist zusätzlich vorgesehen, daß die Schaltelemente 19 Formelemente 30 in Form von Rollen, die um in Fahrtrichtung F verlaufende Achsen drehbar sind, aufweisen, die sich in hierzu komplementär ausgebildeten Ausnehmungen 31 in den Stützelementen 12 abstützen. Hierdurch wird zusätzlich jeweils eine Bewegung der Schaltelemente 19 nach außen verhindert und somit die Tragschale 3 in ihrer Transportstellung verriegelt.

Außerdem ist den Figuren 3 und 4 die Ausbildung der Weichenelemente 27 zu entnehmen. Die Weichenelemente 27 bestehen im wesentlichen aus einer Schaltrolle 32, an die sich in Förderrichtung F gesehen Gleitelemente 36 (Fig. 6) anschließen. Die Weichenelemente sind durch eine Schwenkbewegung um eine in Fahrtrichtung F und unterhalb der Kurvenschiene 28 verlaufende Achse seitlich in den Fahrweg der in Ruhestellung befindlichen Schaltelemente 19 bewegbar. In dieser Schaltstellung fahren die Schaltelemente 19 mit ihren Anlaufschrägen 33 (siehe Figur 2) auf die Schaltrollen 32 und die Gleitelemente 36 auf und werden somit kontinuierlich aus ihrer Ruhestellung in die Betriebsstellung angehoben. Gleichzeitig wird das auf der gegenüberliegenden Seite des Schaltelementes 19 angeordnete Mitnehmerelement 20 in die Kurvenschiene 28 eingehoben. Da die Kurvenschiene 28 in Fahrtrichtung F gesehen nach außen gekrümmt verläuft, wird das Führungselement 21 in der Führungsnut 22 in den zweiten Abschnitt 24 hereingezogen und somit das Mitnehmerelement 20 in der vorzugsweise als U-förmige und nach unten offene Profile ausgebildeten Kurvenschiene 28 gehalten. Zu Beginn der Kurvenschiene 28 wird das Mitnehmerelement 20 zunächst über die Schaltrollen 32 und dann über die Gleitelemente 36 in der angehobenen Position sowie anschließend über den zweiten Abschnitt 24 gehalten. Der Figur 6, die eine Draufsicht auf eine Fahrschiene 9 und eine hieran angeordnete Kurvenschiene 28 zeigt, ist leicht zu entnehmen, daß in Fahrtrichtung F gesehen das Anfang und Ende der Kurvenschiene 28 leicht trichterförmig ausgebildet ist, um das Ein- und Ausfahren der Mitnehmerelemente 20 zu erleichtern. Durch den gekrümmten Verlauf der Kurvenschiene 28 ist es möglich das Schieberelement 16 für die Kippbewegung der Tragschale 3 in der Längsnut 17 zu verschieben.

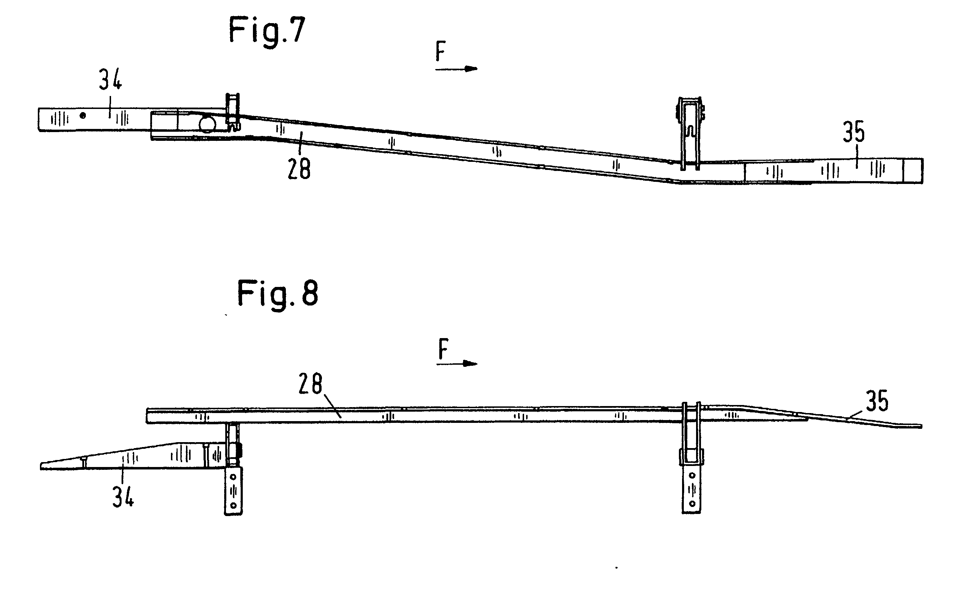

Desweiteren ist in den Figuren 7 und 8 eine Drauf- und eine Seitenansicht einer oberhalb einer Fahrschiene 9 angeordneten Kurvenschiene 28 gezeigt, die zur Aufrichtung der Tragschalen 3 aus ihrer Kippstellung in ihre Transportstellung dient. Hierzu ist zu Beginn der Kurvenschiene 28 eine ortsfest angeordnete Rampe 34 vorgesehen, mittels derer das Schaltelement 19 aus seiner Ruhestellung in die Betriebsstellung angehoben wird. Anschließend verläuft die Kurvenschiene 28 entgegen zu dem in Figur 6 gezeigten Verlauf, so daß das Schaltelement 19 und somit das Schieberelement 16 aus seiner Endstellung wieder in seine Mittelstellung geschoben wird. Am Ende der Kurvenschiene 28 befindet sich ein nach unten gerichtetes Auslaufteil 35, mit dem am Ende der Aufrichtbewegung der Tragschale 3 das Schaltelement 19 aus seiner Betriebsstellung in seine Ruhestellung gedrückt wird, mit dem Ziel die Tragschale 9 zu arretieren.

### Bezugszeichenliste

- 1: Förderer
- 2: Stückgut
- 3: Tragschale
- 4: Kippachse
- 5: Wagen
- 6: Fahrrahmen
- 7: Kupplung
- 8: Fahrrollen
- 9: Fahrschienen
- 10: Führungsrolle
- 11: Kippvorrichtung
- 12: Stützelemente
- 13: Hebel
- 14: Verbindungsachse
- 15: Verbindungshebel
- 16: Schieberelement
- 17: Längsnut
- 18: Schaltachse
- 19: Schaltelement
- 20: Mitnehmerelement
- 21: Führungselement
- 22: Führungsnut
- 23: erster Abschnitt von 22
- 24: zweiter Abschnitt von 22
- 25: dritter Abschnitt von 22
- 26: vierter Abschnitt von 22
- 27: Weichenelement
- 28: Kurvenschiene
- 29: Strebe
- 30: Formelement
- 31: Ausnehmung
- 32: Schaltrolle
- 33: Anlaufschräge
- 34: Rampe
- 35: Auslaufteil
- 36: Gleitelement
- F: Fahrtrichtung

## Patentansprüche

1. Förderer für die Sortierung von Stückgut, insbesondere von Paketen, Päckchen, Behältern und Gepäckstücken, mit aneinander gekoppelten und jeweils einen entlang von Fahrschienen (9) verfahrbaren und einen Fahrrahmen (6) aufweisenden Wagen (5), mit auf dem Fahrrahmen (6) angeordneten und in Fahrtrichtung (F) voneinander beabstandeten Stützelementen (12), mit einer an den Stützelementen (12) gelagerten und in Fahrtrichtung (F) verlaufenden Kippachse (4) für die Aufnahme einer Tragschale (3) über einen Hebel (13), die für die seitliche Abgabe von Stückgut (2) in eine vorbestimmte Zielstation aus einer weitestgehend horizontalen Transportstellung in eine Kippstellung schwenkbar ist, mit einem gelenkig mit dem der Tragschale (3) abgewandten Ende des Hebels (13) verbundenen und quer zur Fahrtrichtung (F) zwischen und an den Stützelementen (12) geführten Schieberelement (16) für die Ausführung der Kippbewegung, mit mindestens einem an dem Schieberelement (16) schwenkbar an einer Schaltachse (18) gelagerten und die Tragschale (3) mindestens in der horizontalen Transportstellung arretierenden Schaltelement (19) mit einem Mitnehmerelement (20), das mittels eines Weichenelementes (27) während der Fahrt in eine abschnittsweise im Bereich der Zielstation entlang der Fahrschienen (9) verlaufende Kurvenschiene (28) aus einer die Tragschale (3) arretierenden Ruhestellung in eine in der Kurvenschiene (28) geführten Betriebsstellung einrückbar ist und über den Verlauf der Kurvenschiene (28) die Bewegung des Schieberelementes (16) und somit die Kippbewegung der Tragschale (3) steuerbar ist,
**dadurch gekennzeichnet,**
**daß** die Schaltachse (18) des Schaltelementes (19) parallel zur Kippachse (4) der Tragschale (3) ausgerichtet ist und an dem Schaltelement (19) ein Führungselement (21.) angeordnet ist, das derart in einer in dem Stützelement (12) verlaufenden Führungsnut (22) geführt ist, daß das Schieberelement (16) in der Transportstellung der Tragschale (3) bei gleichzeitig in Ruhestellung befindlichem Schaltelement (19) arretiert ist und das Mitnehmerelement (20) des Schaltelements (19) während der Kippbewegung der Tragschale (3) in der Kurvenschiene (28) gehalten wird.

2. Förderer nach Anspruch 1,
**dadurch gekennzeichnet,**
**daß** die Führungsnut (22) für das Führungselement (20) einen schräg zu der Bewegungsrichtung des Schieberelementes (16) verlaufenden ersten Abschnitt (23) für die Verriegelung der Tragschale (3) in der Transportstellung durch eine Schwenkbewegung des Schaltelements (19) um die Schaltachse (18) aus seiner Betriebstellung in seine Ruhestellung aufweist und einen an den ersten Abschnitt (23) anschließenden und parallel zu der Bewegungsrichtung des Schieberelementes (16) verlaufenden zweiten Abschnitt (24) für die Führung des Mitnehmerelementes (20) in der Kurvenschiene (28) während der Bewegung des Führungselements (21) in der Betriebstellung des Schaltelementes (19) zwischen der Transportstellung und der Kippstellung der Tragschale (3) aufweist.

3. Förderer nach Anspruch 1 oder 2,
**dadurch gekennzeichnet,**
**daß** das Führungselement (21) derart in der in dem Stützelement (12) verlaufenden Führungsnut (22) geführt ist, daß das Schieberelement (18) in der Kippstellung der Tragschale (3) bei gleichzeitig in Ruhestellung befindlichem Schaltelement (19) arretiert ist.

4. Förderer nach Anspruch 3,
**dadurch gekennzeichnet,**
**daß** die Führungsnut (22) für das Führungselement (21) einen an den zweiten Abschnitt (24) der Führungssnut (22) anschließenden schräg zu der Bewegungsrichtung des Schieberelementes (16) verlaufenden dritten Abschnitt (25) für die Verriegelung der Tragschale (3) in der Kippstellung durch eine Schwenkbewegung des Schaltelements (19) um die Schaltachse (18) aus seiner Betriebstellung in seine Ruhestellung aufweist

5. Förderer nach einem der Ansprüche 1 bis 4,
**dadurch gekennzeichnet,**
**daß** zwei Schaltelemente (19) für je eine der Kippbewegungen der Tragschale (3) aus der Transportstellung nach einer der beiden Seiten in die Kippstellung an jeweils einer Schaltachse (18) gelagert sind und die Schaltachsen (18) in Transportstellung der Tragschale (3) sowie in Vertikalrichtung gesehen jeweils seitlich zur Kippachse (4) versetzt und in Bezug auf die Kippachse (4) gegenüberliegend angeordnet sind.

6. Förderer nach Anspruch 5,
**dadurch gekennzeichnet,**
**daß** die Enden der Schaltachsen (18) jeweils über eine Strebe (29) rahmenförmig miteinander verbunden sind und somit das Schieberelement (16) bilden.

7. Förderer nach Anspruch 5 oder 6,
**dadurch gekennzeichnet,**
**daß** die Führungsnut (22) für das Führungselement (21) einen an dem dem zweiten Abschnitt (24) abgewandten Ende des dritten Abschnitts (25) angrenzenden und parallel zu der Bewegungsrichtung des Schieberelementes (16) verlaufenden vierten Abschnitt (26) für die Führung des außerhalb der Kurvenschiene (28) befindlichen zweiten Mitnehmerelementes (20) in der Ruhestellung und während der Bewegung des ersten Führungselements (20) in dem zweiten Abschnitt der gegenüberliegenden Führungssnut (22) aufweist.

8. Förderer nach einem der Ansprüche 1 bis 7,
**dadurch gekennzeichnet,**
**daß** das Schieberelement (16) über seine in Fahrtrichtung (F) gesehen vorderen und hinteren Enden jeweils in einer weitestgehend horizontal verlaufenden Längsnut (17) geführt ist, die jeweils in den Stützelementen (12) angeordnet ist.

9. Förderer nach Anspruch 6 und 8,
**dadurch gekennzeichnet,**
**daß** die über die Streben (29) hinausragenden Enden der Schaltachsen (18) als Schubstein ausgebildet und in der Längsnut (17) geführt sind.

10. Förderer nach einem der Ansprüche 1 bis 9,
**dadurch gekennzeichnet,**
**daß** die Schaltelemente (19) im Querschnitt und in Fahrtrichtung (F) gesehen als Doppelhebel ausgebildet sind, an deren nach außen ragenden Ende das Mitnehmerelement (20) und an deren nach innen ragenden Ende das Führungselement (21) angeordnet ist.

11. Förderer nach einem der Ansprüche 4 bis 10,
**dadurch gekennzeichnet,**
**daß** der erste und der dritte Abschnitt (23,25) der Führungsnut (22) einem entsprechend dem Schwenkradius des Führungselementes (21) gekrümmten Verlauf aufweist.

12. Förderer nach einem der Ansprüche 1 bis 11,
**dadurch gekennzeichnet,**
**daß** das Schieberelement (16) über einen Verbindungshebel (15) gelenkig mit dem der Tragschale (3) abgewandten Ende des Hebels (13) verbunden ist.

13. Förderer nach einem der Ansprüche 1 bis 12,
**dadurch gekennzeichnet,**
**daß** das Mitnehmerelement (20) als Rolle ausgebildet ist, die bei in Betriebsstellung befindlichem Schaltelement (19) um eine vertikale Achse drehbar ist.

14. Förderer nach einem der Ansprüche 1 bis 13,
**dadurch gekennzeichnet,**
**daß** an dem Schaltelement (19) Formelemente (30) und an den Stützelementen (12) hierzu komplementär ausgebildete Ausnehmungen (31) angeordnet sind, über die in der Ruhestellung des Schaltelements (19) die Kippkräfte der Tragschale (3) in die Stützelemente (12) einleitbar sind.

15. Förderer nach einem der Ansprüche 1 bis 14,
**dadurch gekennzeichnet,**
**daß** die Stützelemente (12) in Fahrtrichtung (F) gesehen einen dreieckförmigen Querschnitt aufweisen, mit einem Schenkel aufrechtstehend auf dem Fahrrahmen (6) angeordnet sind und die Kippachse (4) an dem dem Fahrrahmen (6) abgewandten Ende gelagert ist.

16. Förderer nach einem der Ansprüche 1 bis 15,
**dadurch gekennzeichnet,**
**daß** die Schaltelemente (19) jeweils an ihrer Unterseite eine in Fahrtrichtung (F) verlaufende Anlaufschräge (33) aufweisen, die Weichenelemente (27) am Beginn der Kurvenschienen (28) als in die Bewegungsbahn der Schaltelemente (19) bewegbare Kombination aus Schaltrollen (32) und Gleitelementen (36) für die Kippbewegung der Tragschale (3) ausgebildet sind, über die die mit ihrer Anlaufschräge (33) über die Schaltrollen (32) und die Gleitelemente (36) laufenden Schaltelemente (19) aus ihrer Ruhestellung in ihre Betriebsstellung schwenkbar sind.

17. Förderer nach einem der Ansprüche 1 bis 16,
**dadurch gekennzeichnet,**
**daß** die Kurvenschienen (28) ein derart nach unten ausgelenktes Auslaufteil (35) aufweisen, daß die Schaltelemente (19) aus ihrer Betriebsstellung nach unten in ihre Ruhestellung verschwenkbar sind.

18. Förderer nach einem der Ansprüche 1 bis 17,
**dadurch gekennzeichnet,**
**daß** die Kurvenschienen (28) in Fahrtrichtung (F) gesehen zur Bewegung des Schaltelementes (19) nach außen und zur Kippung der Tragschale (3) zur gegenüberliegenden Seite nach außen gekrümmt, zur Aufrichtung der Tragschale (3) entgegengesetzt verlaufen und als nach unten offene U-Profile ausgebildet sind, in die die Mitnehmerelemente (20) von unten einfahrbar sind.

## Claims

1. Conveyor for sorting articles, in particular packages, packets, containers and pieces of luggage, having carts (5) which are coupled to one another, can be displaced in each case along running rails (9) and have an undercarriage (6), having supporting elements (12) which are arranged on the undercarriage (6) and spaced apart from one another in the direction of travel (F), having a tilting spindle (4) which is mounted on the supporting elements (12), runs in the direction of travel (F) and is intended for accommodating a carrying shell (3) via a lever (13), it being possible for said shell, for the lateral discharge of articles (2) into a predetermined target station, to be pivoted out of a, for the most part, horizontal transporting position into a tilting position, having a slider element (16) which is connected in an articulated manner to that end of the lever (13) which is directed away from the carrying shell (3), is guided transversely to the direction of travel (F) between and on the supporting elements (12) and is intended for executing the tilting movement, and having at least one switching element (19) which is mounted on the slider element (16) such that it can be pivoted on a switching spindle (18), arrests the carrying shell (3) at least in the horizontal transporting position and has a driver element (20), which element can be moved by means of a diverter element (27), during travel into a curved rail (28) which runs along the running rails (9) in certain sections in the region of the target station, out of a rest position, in which the carrying shell (3) is arrested, into an operating position, guided in the curved rail (28), and the movement of the slider element (16) and thus the tilting movement of the carrying shell (3) can be controlled via the course taken by the curved rail (28), **characterized in that** the switching spindle (18) of the switching element (19) is oriented parallel to the tilting spindle (4) of the carrying shell (3), and arranged on the switching element (19) is a guide element (21), which is guided in a guide groove (22), which runs in the supporting element (12), such that the slider element (16) is arrested in the transporting position of the carrying shell (3) when the switching element (19) is simultaneously located in the rest position, and the driver element (20) of the switching element (19) is retained in the curved rail (28) during the tilting movement of the carrying shell (3).

2. Conveyor according to Claim 1, **characterized in that** the guide groove (22) for the guide element (20) has a first section (23), which runs obliquely in relation to the movement direction of the slider element (16) and is intended for locking the carrying shell (3) in the transporting position by virtue of the switching element (19) being pivoted, about the switching spindle (18), out of its operating position into its rest position, and has a second section (24), which adjoins the first section (23), runs parallel to the movement direction of the slider element (16) and is intended for guiding the driver element (20) in the curved rail (28) during the movement of the guide element (21), in the operating position of the switching element (19), between the transporting position and the tilting position of the carrying shell (3).

3. Conveyor according to Claim 1 or 2, **characterized in that** the guide element (21) is guided in the guide groove (22), which runs in the supporting element (12), such that the slider element (18) is arrested in the tilting position of the carrying shell (3) when the switching element (19) is simultaneously located in the rest position.

4. Conveyor according to Claim 3, **characterized in that** the guide groove (22) for the guide element (21) has a third section (25), which adjoins the second section (24) of the guide groove (22), runs obliquely in relation to the movement direction of the slider element (16) and is intended for locking the carrying shell (3) in the tilting position by virtue of the switching element (19) being pivoted, about the switching spindle (18), out of its operating position into its rest position.

5. Conveyor according to one of Claims 1 to 4, **characterized in that** two switching elements (19) for in each case one of the tilting movements of the carrying shell (3) out of the transporting position, to one of the two sides, into the tilting position are mounted on in each case one switching spindle (18), and the switching spindles (18) in the transporting position of the carrying shell (3), and as seen in the vertical direction, are offset laterally in each case in relation to the tilting spindle (4) and are arranged opposite one another in relation to the tilting spindle (4).

6. Conveyor according to Claim 5, **characterized in that** the ends of the switching spindles (18) are connected to one another in a frame-like manner in each case via a strut (29) and thus form the slider element (16).

7. Conveyor according to Claim 5 or 6, **characterized in that** the guide groove (22) for the guide element (21) has a fourth section (26), which is adjacent to that end of the third section (25) which is directed away from the second section (24), runs parallel to the movement direction of the slider element (16) and is intended for guiding the second driver element (20), located outside the curved rail (28), in the rest position and during the movement of the first guide element (20) in the second section of the opposite guide groove (22).

8. Conveyor according to one of Claims 1 to 7, **characterized in that** the slider element (16) is guided via its front and rear ends in each case, as seen in the direction of travel (F) in a, for the most part, horizontally running longitudinal groove (17), which is arranged in the supporting elements (12) in each case.

9. Conveyor according to Claims 6 and 8, **characterized in that** the ends of the switching spindles (18), which project beyond the struts (29), are designed as a sliding block and are guided in the longitudinal groove (17).

10. Conveyor according to one of Claims 1 to 9, **characterized in that** the switching elements (19) are designed, as seen in cross section and in the direction of travel (F), as double levers, with the driver element (20) arranged at their outwardly projecting end and the guide element (21) arranged at their inwardly projecting end.

11. Conveyor according to one of Claims 4 to 10, **characterized in that** the first and the third sections (23, 25) of the guide groove (22) follow a curved course corresponding to the pivoting radius of the guide element (21).

12. Conveyor according to one of Claims 1 to 11, **characterized in that** the slider element (16) is connected in an articulated manner, via a connecting lever (15), to that end of the lever (13) which is directed away from the carrying shell (3).

13. Conveyor according to one of Claims 1 to 12, **characterized in that** the driver element (20) is designed as a roller which, when the switching element (19) is located in the operating position, can be rotated about a vertical axis.

14. Conveyor according to one of Claims 1 to 13, **characterized in that** arranged on the switching element (19) are shaped elements (30), and arranged on the supporting elements (12) are complementary recesses (31), via which, in the rest position of the switching element (19), the tilting forces of the carrying shell (3) can be introduced into the supporting elements (12).

15. Conveyor according to one of Claims 1 to 14, **characterized in that** the supporting elements (12), as seen in the direction of travel (F) have a triangular cross section and are arranged on the undercarriage (6) with one leg upright, and the tilting spindle (4) is mounted at the end which is directed away from the undercarriage (6).

16. Conveyor according to one of Claims 1 to 15, **characterized in that** the switching elements (19), on their underside in each case, have a run-on slope (33) running in the direction of travel (F), and the diverter elements (27), at the beginning of the curved rails (28), are designed as a combination of switching rollers (32) and sliding elements (36) for the tilting movement of the carrying shell (3) which can be moved into the movement path of the switching elements (19) and via which the switching elements (19), which run over the switching rollers (32) and the sliding elements (36) by way of their run-on slope (33), can be pivoted out of their rest position into their operating position.

17. Conveyor according to one of Claims 1 to 16, **characterized in that** the curved rails (28) have an outlet part (35) which is deflected downwards such that the switching elements (19) can be pivoted downwards out of their operating position into their rest position.

18. Conveyor according to one of Claims 1 to 17, **characterized in that** the curved rails (28), as seen in the direction of travel (F), are curved outwards for moving the switching element (19) outwards and for tilting the carrying shell (3) to the opposite side, run in the opposite direction for righting the carrying shell (3), and are designed as U-profiles which are open at the bottom and into which the driver elements (20) can be moved from beneath.

## Revendications

1. Convoyeur pour le tri de marchandises, notamment de colis, paquets, récipients et pièces de bagage, comprenant des wagonnets (5) couplés les uns aux autres et comportant chacun un châssis de roulement (6) pouvant se déplacer le long de rails de déplacement (9), comprenant des éléments de support (12) disposés sur le châssis de roulement (6) et espacés réciproquement dans la direction de déplacement (F), comprenant un axe de basculement (4) monté sur les éléments de support (12) et s'étendant dans la direction de déplacement (F) et destiné à recevoir, par l'intermédiaire d'un levier (13), un plateau porteur (3) qui, pour délivrer latéralement des marchandises (2) dans un poste de destination prédéterminé, peut pivoter d'une position de transport essentiellement horizontale dans une position basculée, comprenant également un élément de coulisseau (16) qui est destiné à effectuer le mouvement de basculement et est relié de manière articulée à l'extrémité du levier (13) éloignée du plateau porteur (3), et est guidé transversalement à la direction de déplacement (F) entre et sur les éléments de support (12), comprenant par ailleurs au moins un élément de commande (19) qui est monté pivotant sur l'élément de coulisseau (16) sur un axe de commande (18), bloque le plateau porteur (3) au moins dans la position de transport horizontale, et comporte un élément entraîneur (20) qui, au moyen d'un élément d'aiguillage (27), pendant le déplacement, peut être engagé dans un rail de came (28) s'étendant par tronçon dans la zone du poste de destination, le long des rails de déplacement (9), pour passer d'une position de repos bloquant le plateau porteur (3), dans une position de fonctionnement avec guidage dans le rail de came (28), et le mouvement de l'élément de coulisseau (16) et ainsi le mouvement de basculement du plateau porteur (3) pouvant être commandé par le tracé du rail de came (28),
**caractérisé en ce que** l'axe de commande (18) de l'élément de commande (19) est orienté parallèlement à l'axe de basculement (4) du plateau porteur (3), et sur l'élément de commande (19) est disposé un élément de guidage (21) qui est guidé dans une rainure de guidage (22) s'étendant dans l'élément de support (12) de façon telle, que l'élément de coulisseau (16) soit bloqué dans la position de transport du plateau porteur (3), avec l'élément de commande (19) se trouvant simultanément dans la position de repos, et l'élément entraîneur (20) de l'élément de commande (19) soit maintenu dans le rail de came (28) pendant le mouvement de basculement du plateau porteur (3).

2. Convoyeur selon la revendication 1, **caractérisé en ce que** la rainure de guidage (22) pour l'élément de guidage (20) présente un premier tronçon (23) s'étendant de manière inclinée par rapport à la direction de mouvement de l'élément de coulisseau (16), pour le verrouillage du plateau porteur (3) dans la position de transport par un mouvement de pivotement de l'élément de commande (19) autour de l'axe de commande (18), de sa position de fonctionnement à sa position de repos, et présente un second tronçon (24) se raccordant au premier tronçon (23) et s'étendant parallèlement à la direction de mouvement de l'élément de coulisseau (16), pour le guidage de l'élément entraîneur (20) dans le rail de came (28) pendant le mouvement de l'élément de guidage (21) dans la position de fonctionnement de l'élément de commande (19), entre la position de transport et la position de basculement du plateau porteur (3).

3. Convoyeur selon la revendication 1 ou 2, **caractérisé en ce que** l'élément de guidage (21) est guidé dans la rainure de guidage (22) s'étendant dans l'élément de support (12), de façon telle que l'élément de coulisseau (16), dans la position de basculement du plateau porteur (3) et pour un élément de commande (19) se trouvant simultanément en position de repos, soit bloqué.

4. Convoyeur selon la revendication 3, **caractérisé en ce que** la rainure de guidage (22) pour l'élément de guidage (21) présente un troisième tronçon (25) se raccordant au second tronçon (24) de la rainure de guidage (22) et s'étendant de manière inclinée par rapport à la direction de mouvement de l'élément de coulisseau (16), pour le verrouillage du plateau porteur (3) dans la position de basculement, par un mouvement de pivotement de l'élément de commande (19) autour de l'axe de commande (18), de sa positon de fonctionnement à sa position de repos.

5. Convoyeur selon l'une des revendications 1 à 4, **caractérisé en ce que** deux éléments de commande (19) respectivement pour l'un des mouvements de basculement du plateau porteur (3) de la position de transport vers l'un des deux côtés, dans la position de basculement, sont montés chacun respectivement sur un axe de commande (18), et les axes de commande (18), vu dans la direction de transport du plateau porteur (3) ainsi que dans la direction verticale, sont décalés chacun latéralement par rapport à l'axe de basculement (4) et disposés de manière mutuellement opposée par rapport à l'axe de basculement (4).

6. Convoyeur selon la revendication 5, **caractérisé en ce que** les extrémités des axes de commande (18) sont respectivement reliées par une entretoise (29), à la manière d'un cadre, en formant ainsi l'élément de coulisseau (16).

7. Convoyeur selon la revendication 5 ou 6, **caractérisé en ce que** la rainure de guidage (22) pour l'élément de guidage (21) présente un quatrième tronçon (26) adjacent à l'extrémité du troisième tronçon (25) éloignée du second tronçon (24), et s'étendant parallèlement à la direction de mouvement de l'élément de coulisseau (16), pour le guidage du second élément entraîneur (20) se trouvant en-dehors du rail de came (28), dans la position de repos et pendant le mouvement du premier élément de guidage (21) dans le second tronçon de la rainure de guidage (22) opposée.

8. Convoyeur selon l'une des revendications 1 à 7, **caractérisé en ce que** l'élément de coulisseau (16), par l'intermédiaire de ses extrémités avant et arrière en se référant à la direction de déplacement (F), est guidé respectivement dans une rainure longitudinale (17) s'étendant essentiellement à l'horizontale et disposée respectivement dans les éléments de support (12).

9. Convoyeur selon la revendication 6 et 8, **caractérisé en ce que** les extrémités des axes de commande (18), qui font saillie à l'extérieur des entretoises (29), sont réalisées sous forme de patin de poussée, et sont guidées dans la rainure longitudinale (17).

10. Convoyeur selon l'une des revendications 1 à 9, **caractérisé en ce que** les éléments de commande (19), vu en section transversale et dans la direction de déplacement (F), sont réalisés en tant que levier double, dont l'extrémité orientée vers l'extérieur est pourvue de l'élément entraîneur (20) et l'extrémité orientée vers l'intérieur est pourvue de l'élément de guidage (21).

11. Convoyeur selon l'une des revendications 4 à 10, **caractérisé en ce que** le premier et le troisième tronçon (23, 25) de la rainure de guidage (22) présente un tracé courbé de manière correspondante au rayon de pivotement de l'élément de guidage (21).

12. Convoyeur selon l'une des revendications 1 à 11, **caractérisé en ce que** l'élément de coulisseau (16) est relié de manière articulée, par l'intermédiaire d'un levier de liaison (15), à l'extrémité du levier (13) éloignée du plateau porteur (3).

13. Convoyeur selon l'une des revendications 1 à 12, **caractérisé en ce que** l'élément entraîneur (20) est réalisé sous forme de galet qui, lorsque l'élément de commande (19) se trouve dans la position de fonctionnement, peut tourner autour d'un axe vertical.

14. Convoyeur selon l'une des revendications 1 à 13, **caractérisé en ce que** sur l'élément de commande (19) sont placés des éléments de forme (30) et sur les éléments de support (12) des évidements (31) de configuration complémentaire à celle des éléments de forme, par l'intermédiaire desquels, dans la position de repos de l'élément de commande (19), les forces de basculement du plateau porteur (3) peuvent être transférées dans les éléments de support (12).

15. Convoyeur selon l'une des revendications 1 à 14, **caractérisé en ce que** les éléments de support (12), vu dans la direction de déplacement (F), présentent une section transversale de forme triangulaire et sont disposés avec un côté verticalement debout sur le châssis de roulement (6), et l'axe de basculement (4) est monté à l'extrémité éloignée du châssis de roulement (6).

16. Convoyeur selon l'une des revendications 1 à 15, **caractérisé en ce que** les éléments de commande (19) présentent chacun sur leur côté inférieur, une rampe d'entrée (33) s'étendant dans la direction de déplacement (F), et **en ce que** les éléments d'aiguillage (27) sont réalisés au début des rails de came (28) sous la forme d'une combinaison de galets de commande (32) et d'éléments de glissement (36) pouvant être déplacée dans la trajectoire de mouvement des éléments de commande (19) pour le mouvement de basculement du plateau porteur (3), et par l'intermédiaire de laquelle les éléments de commande (19) passant avec leur rampe d'entrée (33) sur les galets de commande (32) et les éléments de glissement (36), peuvent pivoter de leur position de repos dans leur position de fonctionnement.

17. Convoyeur selon l'une des revendications 1 à 16, **caractérisé en ce que** les rails de came (28) présentent une partie de sortie (35) déviée vers le bas de manière telle, que les éléments de commande (19) puissent pivoter vers le bas, de leur position de fonctionnement dans leur position de repos.

18. Convoyeur selon l'une des revendications 1 à 17, **caractérisé en ce que** les rails de came (28), vu dans la direction de déplacement (F), sont coudés vers l'extérieur pour déplacer l'élément de commande (19) vers l'extérieur et faire basculer le plateau porteur (3) vers le côté opposé, s'étendent de manière opposée pour redresser le plateau porteur (3), et sont réalisés sous la forme de profilés en U ouverts vers le bas, dans lesquels peuvent s'introduire par le bas, les éléments entraîneurs (20).
